## Europäisches Patentamt

## European Patent Office

## Office européen des brevets

(11) Publication number: **0 202 714 B1**

(12) **EUROPEAN PATENT SPECIFICATION**

(45) Date of publication of the patent specification:
**16.08.89**

(51) Int. Cl.⁴: **F04B 15/04,** F04B 17/04, H02K 33/02, H02K 3/30

(21) Application number: **86200836.4**

(22) Date of filing: **14.05.86**

(54) **A pump with an electronically controllable stroke volume.**

(30) Priority: **15.05.85 NL 8501402**

(43) Date of publication of application:
**26.11.86 Bulletin 86/48**

(45) Publication of the grant of the patent:
**16.08.89 Bulletin 89/33**

(84) Designated Contracting States:
**DE FR GB IT NL**

(56) References cited:
**CH-A- 114 171**
**DE-B- 1 290 820**
**GB-A- 827 784**
**LU-A- 30 732**
**US-A- 2 293 684**

(73) Proprietor: **EUROPEAN ATOMIC ENERGY COMMUNITY (EURATOM), Batiment Jean Monnet Plateau du Kirchberg Boite Postale 1907, L-2920 Luxembourg(LU)**

(72) Inventor: **Korko, Antoni Richard, c/o B.P. 1907, Luxembourg(LU)**
Inventor: **Markgraf, Joachim Fritz Wilhelm, c/o B.P. 1907, Luxembourg(LU)**

(74) Representative: **Smulders, Theodorus A.H.J., Ir. et al, Vereenigde Octrooibureaux Nieuwe Parklaan 107, NL-2587 BP 's-Gravenhage(NL)**

## Description

This invention relates to a pump with an electronically controllable pump capacity comprising a metal pump housing with an intake line and a delivery line, a coil arranged around a first part of the pump housing; a one-way valve in said delivery line; a chamber formed in the interior of the housing, said intake line leading from an end face of the pump housing to a second part of said chamber and said delivery line being connected to a first part of said chamber; and an elongated plunger mounted in said chamber, said plunger being biased to a first position, a first part of the plunger extending into the first part of the pump housing being surrounded by the coil, at least this first part of the plunger being made of a magnetisable material, and a second part of the plunger extending into the second part of said pump housing, a passage being formed in this second part of the plunger, which passage forms a connection between the first part and the second part of the chamber in the pump housing, a further one-way valve being provided in said passage.

Such a pump is described in LU-A 30 732. This known pump and other commercially available pumps are unsuitable for use in nuclear reactors because they are not resistant to high pressures, and/or high temperatures, and/or the effect of neutron and gamma radiation. Existing pumps comprise plastic and rubber parts, such as membranes and seals, while existing electronically controllable pumps are provided with a coil whose winding is not resistant to the above effects.

However, there is a need for such a pump, for example for applications in nuclear reactor technology, e.g. in simulating failures in nuclear reactors in test set-ups of trial reactors.

Furthermore, for certain uses in nuclear reactors it is necessary for the pump to be of very small size and yet present a large stroke volume, which requirements are not satisfied by the existing pumps either. Finally, in a reactor the pump is used under water, as a consequence of which the voltage at which the pump can be operated must not exceed 48 V.

It is accordingly an object of the present invention to provide a pump which satisfies the above requirements, and in particular a pump which is assembled fully from corrosion-resistant metal and ceramic material, as such materials are resistant to conditions prevailing in a nuclear reactor.

It is a further object of the invention to provide a pump that is hermetically sealed from its surroundings and has a large, electronically controllable stroke volume, with the pump being arranged to operate at a supply voltage no higher than 48 V.

For this purpose the present invention provides a pump of the above mentioned kind characterized in that the metal of the pump housing is corrosion resistant; that the coil is wound from a metal wire having a ceramic insulation cladding and a closed metal outer sheath; that the diameter of the second part of the chamber and of the second part of the plunger is smaller than the diameter of the first part of the chamber and of the first part of the plunger; that the second part of the plunger has such a length that this second part forms a dynamic seal with the adjoining chamber wall; and that the delivery line is connected to a side wall of the chamber and leads to the same end face as to which the intake line is connected.

In the pump according to the invention the second part of the plunger, which extends into the second part of the chamber in the pump housing, has a predetermined length, which during the operation of the pump provides for a dynamic seal between the intake side and the delivery side of the pump. This dynamic seal renders the use of, e.g., rubber sealing rings unneccessary.

Further, the coil is wound from metal wire surrounded by a ceramic insulation, e.g. aluminium oxide or magnesium oxide, and a thin outer sheath of metal. Such a wire is known per se for use in waterproof heating elements, but not for use in coils. It has surprisingly been found that a coil wound from this material is very satisfactory and resistant to high temperatures, high pressures and neutron and gamma radiation.

One embodiment of the invention will now be described, by way of example, with reference to the accompanying drawings, in which:

Fig. 1 shows a part-sectional elevational view of the pump according to the present invention; and

Fig. 2 shows a cross-sectional view, taken on the line II-II of Fig. 1.

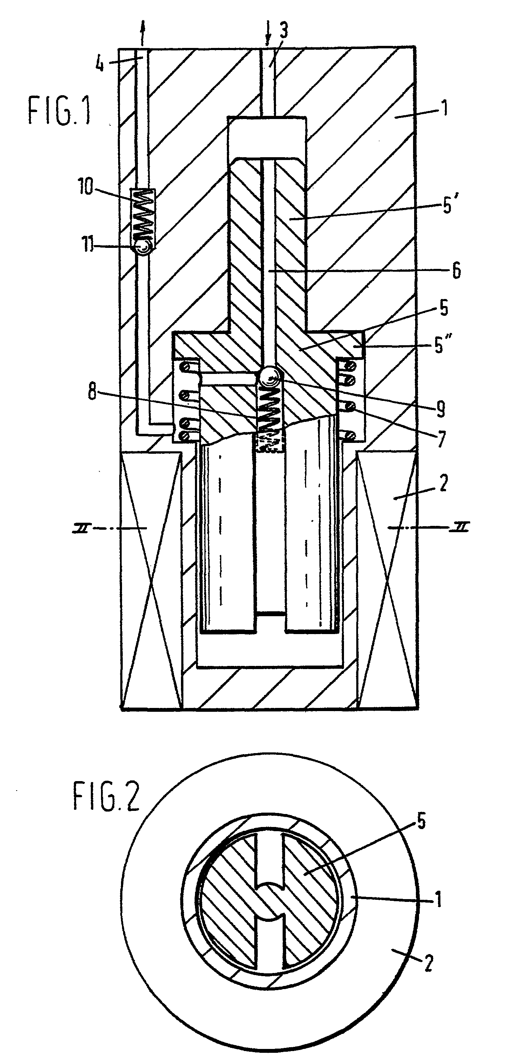

In Fig. 1, reference numeral 1 designates the pump housing, which is made of corrosion-resistant metal. Arranged around the bottom part of the pump housing is a coil 2, shown diagrammatically. The pump housing 1 further comprises an intake line 3 and a delivery line 4. Formed within the pump housing is a chamber for receiving a plunger 5. The lower part of the plunger, as viewed in Fig. 1, extends into the bottom part of housing 1 to such an extent that it is surrounded by coil 2. Plunger 5 has an extended top portion 5', in which a passage 6 is formed, through which liquid can flow from intake line 3 to the lower part of the chamber.

Plunger 5 is biased towards a first, uppermost position, in which its collar portion 5" is in contact with the pump housing, by a spring 7, which abuts against a shoulder formed in the chamber of the pump housing.

Formed within passage 6 is a one-way valve, comprising a ball 9 loaded by a spring 8 to close passage 6. A similar shut-off valve, comprising a ball 11 biased by a spring 10 is formed in delivery line 4.

For a good operation of the pump, it is necessary that at least the part of plunger 5 that is surrounded by coil 2 is made of a magnetisable material, although naturally the entire plunger may be made of this material.

The operation of the pump according to the invention is as follows. When an electric voltage pulse is supplied to coil 2, through lines not shown, from a known per se source of voltage, the lower part of the plunger will be pulled against, or down to the vicinity of, the bottom of pump housing 1, against the action of spring 7, by the magnetic field generated by coil 2. As a result, the liquid present within the chamber in the pump housing is forced through line 4 out of the pump housing, thereby opening the one-way valve in the delivery line. The one-way valve in passage 6 prevents liquid from being removed through that conduit.

When the supply voltage to coil 2 drops out, the plunger 5 will be returned to its uppermost position under the influence of spring 7, whereby liquid can flow through passage 6 into the lower part of the chamber, thereby opening the one-way valve in passage 6.

The extension 5' of the plunger provides for an effective dynamic seal between the intake side and the delivery side of the pump, without any rubber sealing rings or the like being required for this purpose. Owing to the length of plunger portion 5' and the inertia of the liquid, hardly any liquid flows through the interspace between the chamber wall and the plunger portion 5' during pump action. Pressure variations in the system in which the pump is included have no effect on its operation, because these variations are immediately counterbalanced through the one-way valves in the intake and delivery lines, provided of course these lines are connected to the same system.

In a trial set-up, use was made of a pump as illustrated in Fig. 1, with a diameter of 40 mm and a length of 112mm. The coil was made of 300 windings of a stainless steel coaxial cable with an outer diameter of 1 mm, wound around a non-magnetisable stainless steel core having an inner diameter of 14.6 mm. The coil had a resistance of $\cong 7$ ohm. Supplied to the coil was a block voltage with an amplitude of 30 V and a controllable frequency, whereby a current of 3 Amp flowed through the coil. By controlling the frequency of the supply voltage, the stroke volume of the pump, determined by the plunger surface area times the stroke times the frequency of the plunger, was varied.

With a frequency of 5 Hz, the pump was found to have a stroke volume of 150 cm³/min; at 10 Hz 250 cm³/min; and at 20 Hz 350 cm³/min. It further turned out that the stroke volume could also be varied by varying the amount of the supply voltage, because with such a variation the plunger is pulled farther or less far in the direction of the bottom of the pump housing.

The pump was further found to be resistant to internal or external pressures of up to 200 bar and temperatures of about 400°C. In principle the pump is resistant to still higher temperatures, but at such high temperatures the magnetic properties of the plunger are adversely affected. As the pump is fully made of corrosion-resistant metal and ceramic material it is also resistant to the effect of gamma radiation and neutron radiation of a high intensity as occurring in nuclear plants.

Although the pump according to the invention has been described for use in a nuclear reactor, it is naturally suitable for other purposes, in particular for use in corrosive liquids and/or at high temperatures and/or at high pressures. Also, the pump can be given dimensions different from the above without adversely affecting its good operation.

## Claims

1. A pump with an electronically controllable pump capacity comprising a metal pump housing (1) with an intake line (3) and a delivery line (4), a coil (2) arranged around a first part of the pump housing; a one-way valve (10, 11) in said delivery line; a chamber formed in the interior of the housing, said intake line (3) leading from an end face of the pump housing to a second part of said chamber and said delivery line (4) being connected to a first part of said chamber; and an elongated plunger (5) mounted in said chamber, said plunger being biased to a first position, a first part (5") of the plunger extending into the first part of the pump housing being surrounded by the coil, at least this first part of the plunger being made of a magnetisable material, and a second part (5') of the plunger extending into the second part of said pump housing, a passage (6) being formed in this second part of the plunger, which passage forms a connection between the first part and the second part of the chamber in the pump housing, a further one-way valve (8, 9) being provided in said passage, characterized in that the metal of the pump housing is corrosion resistant; that the coil (2) is wound from a metal wire having a ceramic insulation cladding and a closed metal outer sheath; that the diameter of the second part of the chamber and of the second part of the plunger is smaller than the diameter of the first part of the chamber and of the first part of the plunger; that the second part of the plunger has such a length that this second part forms a dynamic seal with the adjoining chamber wall; and that the delivery line (4) is connected to a side wall of the chamber and leads to the same end face as to which the intake line (3) is connected.

## Patentansprüche

Pumpe mit einer elektronisch steuerbaren Pumpenkapazität, mit einem Pumpengehäuse (1) aus Metall mit einer Eingangsleitung (3) und einer Abgabeleitung (4), einer Spule (2), die um einen ersten Abschnitt des Pumpengehäuses angeordnet ist, einem Einwegeventil (10, 11) in der Abgabeleitung, und mit einer Kammer im Gehäuseinnern, wobei die Eingangsleitung (3) von einer Endfläche des Pumpengehäuses zu einem zweiten Teil der Kammer führt und die Abgabeleitung (4) mit einem ersten Teil der Kammer verbunden ist, wobei ein länglicher Kolben (5) in der Kammer angeordnet ist, welcher in eine erste Lage vorgespannt ist, wobei sich ein erster Teil (5") des Kolbens in den ersten Teil des Pumpengehäuses erstreckt, welcher von der Spule umgeben ist, wobei wenigstens dieser erste Teil des Kolbens aus einem magnetisierbaren Material besteht, sich ein zweiter Teil (5') des Kolbens in den zweiten Teil des Pumpengehäuses erstreckt und in diesem zweiten Teil des Kolbens ein Durchgang (6) vorgesehen ist, welcher eine Verbindung zwischen dem ersten Teil und dem zweiten Teil der Kammer in dem Pumpengehäuse schafft, wobei in diesem Durchgang ein weiteres Einwegeventil (8, 9) vorgesehen ist, dadurch gekennzeichnet, daß das Metall des Pumpengehäuses korrosionsbeständig ist, daß die Spule (2) aus einem Metalldraht gewickelt ist, welcher eine keramische Isolierschicht und eine äußere geschlossene Metallhülle aufweist, daß der Durchmesser des zweiten Teiles der Kammer und des zweiten Teiles des Kolbens geringer als der Durchmesser des ersten Teiles der Kammer und des ersten Teiles des Kolbens ist, daß der zweite Teil des Kolbens eine solche Länge aufweist, daß dieser zweite Teil mit der angrenzenden Kammerwand eine dynamische Abdichtung bildet, und daß die Abgabeleitung (4) mit einer Seitenwand der Kammer verbunden ist und zu der gleichen Endfläche führt, mit welcher die Eingangsleitung (3) verbunden ist.

## Revendications

Pompe dont la capacité de refoulement est contrôlable électroniquement, comprenant un cadre de pompe métallique (1) avec une canalisation d'aspiration (3) et une canalisation de refoulement (4), une bobine (2) disposée autour d'une première partie du corps de pompe; une soupape à une voie (10, 11) sur ladite canalisation de refoulement; une chambre formée à l'intérieur du corps, ladite canalisation d'aspiration (3) conduisant d'une face d'extrémité du corps de pompe à une seconde partie de ladite chambre et ladite canalisation de refoulement (4) étant reliée à une première partie de ladite chambre; et un piston allongé (5) monté dans ladite chambre, ledit piston étant sollicité dans une première position, une première partie (5") du piston s'étendant dans la première partie du corps de pompe qui est entourée par la bobine, au moins cette première partie du piston étant réalisée en un matériau magnétisable, et une seconde partie (5') du piston s'étendant dans le seconde partie dudit corps de pompe, un passage (6) étant formé dans cette seconde partie du piston, ledit passage formant une liaison entre la première partie et la seconde partie de la chambre dans le corps de pompe, une autre soupape à une voie (8, 9) étant disposée dans ledit passage, caractérisée par le fait que le métal du corps de pompe est résistant à la corrosion; que la bobine (2) est formée par enroulement d'un fil métallique présentant une gaine isolante en céramique et un fourreau externe métallique fermé; que le diamètre de la seconde partie de la chambre et de la seconde partie de la chambre et de la prèmiere partie du piston est inférieur au diamètre de la pemière partie du piston; que la seconde partie du piston présente une longueur telle que cette seconde partie forme une étanchéité dynamique avec la paroi de chambre adjacente, et que la canalisation de refoulement (4) est reliée à une paroi latérale de la chambre et conduit à la même face d'extrémité que celle à laquelle la canalisation d'aspiration (3) est reliée.

FIG.1

FIG.2